# EUROPEAN PATENT SPECIFICATION

(11) **EP 3 975 213 B1**
(45) Date of publication and mention of the grant of the patent: **11.12.2024**
(21) Application number: 20198712.0
(22) Date of filing: 28.09.2020
(51) Int. Cl.: H01G 11/28, C01B 32/16, C01B 32/158, C01B 25/00, H01G 11/86, H01G 11/36, C01B 32/168

(54) **METHOD FOR MANUFACTURING HYBRID BINDER-FREE ELECTRODES FOR ELECTROCHEMICAL SUPERCAPACITORS**
VERFAHREN ZUR HERSTELLUNG VON HYBRIDEN BINDEMITTELFREIEN ELEKTRODEN FÜR ELEKTROCHEMISCHE SUPERKONDENSATOREN
PROCÉDÉ DE FABRICATION D'ÉLECTRODES HYBRIDES SANS LIANT POUR DES SUPERCONDENSATEURS ÉLECTROCHIMIQUES

(43) Date of publication of application: 30.03.2022
(73) Proprietor: Jozef Stefan Institute, 1000 Ljubljana (SI)
(72) Inventor: Marath Santhosh, Neelakandan, 1000 Ljubljana (SI); Filipic, Gregor, 1000 Ljubljana (SI); Zavasnik, Janez, 1000 Ljubljana (SI); Cvelbar, Uros, 1000 Ljubljana (SI)
(74) Representative: Nederlandsch Octrooibureau

(56) References cited:
- CN-A- 110 033 959
- JP-A- 2003 171 108
- RU-C1- 2 660 819
- US-A1- 2003 203 139
- US-A1- 2013 074 771
- DAI CHAO-SHUAN ET AL: "Hierarchically Structured Ni 3 S 2 /Carbon Nanotube Composites as High Performance Cathode Materials for Asymmetric Supercapacitors", APPLIED MATERIALS & INTERFACES, vol. 5, no. 22, 18 November 2013 (2013-11-18), US, pages 12168 - 12174, XP055777358, ISSN: 1944-8244, Retrieved from the Internet <URL:https://pubs.acs.org/doi/pdf/10.1021/am404196s> DOI: 10.1021/am404196s
- I.K. SONG: "The growth mode change in carbon nanotube synthesis in plasma-enhanced chemical vapor deposition", DIAMOND AND RELATED MATERIALS, vol. 13, no. 4-8, 1 April 2004 (2004-04-01), NL, pages 1210 - 1213, XP093163302, ISSN: 0925-9635, Retrieved from the Internet <URL:https://www.sciencedirect.com/science/article/pii/S092596350400010X/pdfft?md5=54af15cfa3baa192d4bb259c4f573ff2&pid=1-s2.0-S092596350400010X-main.pdf> DOI: 10.1016/j.diamond.2004.01.006
- KENNETH B K TEO: "Catalytic Synthesis of Carbon Nanotubes and Nanofibers", 1 January 2003 (2003-01-01), pages 1 - 22, XP093163282, Retrieved from the Internet <URL:http://nanotubes.rutgers.edu/PDFs/Catalytic%20Synthesis%20of%20Carbon%20Nanotubes%20and%20Nanofibers.pdf>

## Description

### FIELD OF INVENTION

The invention relates to methods for manufacturing hybrid binder-free electrodes for electrochemical energy storage devices, such as for electrochemical supercapacitors, and to hybrid binder-free electrodes for electrochemical energy storage devices. The invention further relates to the use of the hybrid binder-free electrodes as an electrode for a supercapacitor for electrochemical energy storage devices or as or in an electrode for an electrochemical supercapacitor for high-frequency line filtering applications.

### BACKGROUND OF THE INVENTION

The increase in the cost of fuels, exhaustion of non-renewable energy sources, pollution, and a large increase in the use of portable electronic devices requires other energy storage technologies and devices to fulfil the energy needs beyond current consumer requirements. As a result, there is a growing interest in high-power and high-energy-density storage systems. Electrochemical energy devices form an indispensable part of the transition to green energy. Supercapacitors, batteries and fuel cells are energy devices based on an electrochemical energy conversion mechanism. An electrochemical supercapacitor is an energy storage device with high specific capacitance, long cycle life, high power density, and no memory effect. A supercapacitor can store 10 to 100 times more energy per unit mass than electrolytic capacitors and can deliver charge much faster than commonly used batteries, with a fast charge-discharge process. Thus, supercapacitors can function as a bridge for the power-energy difference that exists between electrolytic capacitors (higher power density) and batteries (high energy storage). Being small, light-weight, and easy to handle makes supercapacitors attractive components for portable electronic devices. Moreover, supercapacitors can be used in hybrid electric vehicles to offer sufficient power for rapid acceleration and energy recuperation during braking.

As energy storage devices, supercapacitors are dependent on direct current (DC) power. Additionally, the complex microporous structures in a carbon-based electrode exhibit large electrochemical resistance and can rarely be charged and discharged at high frequencies (above 1 Hz). This unsatisfactory frequency response of supercapacitors is one of the bottlenecks in the conversion of alternating current (AC) to DC and thus for increasing power demand. Conventional AC filter capacitors are based on aluminium electrolytic capacitors, which are bulky in size and have small capacitance. Electrodes for filtering applications in a supercapacitor demand highly conductive thin (1-10 µm) electrode material in an intimate interconnect format, with minimum contact resistance with the current collector.

Most of the currently available energy storage devices use carbon-based electrodes for the charge-storage mechanism. Commercially available carbon-based electrodes do not meet the requirements for high-energy-density applications due to their low theoretical capacity. Alternatives to carbon-based materials are tin oxide and silicon-based materials that are capable of providing high specific capacity and energy density. Nevertheless, some of the high capacity electrodes have been found unsuitable due to capacity fading after initial charge-discharge cycles and due to large volume expansions. The large volume expansions and structural changes can damage the electrode material and thereby lower the cycling stability.

To meet the above-mentioned characteristics for supercapacitors with excellent filtering properties, direct growth of carbon-based materials on a conductive substrate (current collector) can be used as a suitable technique, which can allow an intimate interconnect format and minimum contact resistance with the current collector.

US2012/0154983A1 discloses a method for the manufacture of carbon nanofibers on nickel foam for supercapacitor applications. A two-step process for the synthesis of carbon nanofibers is disclosed, including chemical vapour deposition at a temperature of 475 °C.

WO98/014970A1 discloses the application of metal nitrides for electrical energy storage devices. A multi-step process for fabricating the electrode material at high temperatures is disclosed.

A method for graphene-carbon-nanotube-based hybrid-material-based electrodes for supercapacitor applications with high-frequency performance was given in US9455094B2. The method comprises different stages, which include the growth of graphene by chemical vapour deposition, depositing catalyst material onto the graphene, and the growth of carbon nanotubes at high temperatures.

CN105895882B discloses a preparation method for nitrogen-doped graphene cladding nickel sulphide composite electrode materials. The method of CN105895882B includes high-temperature annealing for the preparation of the electrode material. High-temperature synthesis conditions are not a suitable option for the large scale growth of electrode materials due to large energy consumption and critical treatment conditions.

US8971018B2 reveals the application of metal nitride-containing electrodes for supercapacitors. The active materials were fabricated by an ammonothermal process using supercritical ammonia with alkali mineralizers. The active materials are mixed with conductive carbon agents and binders and coated onto a current collector to fabricate the electrode.

A multi-step method, including chemical vapour deposition, atomic layer deposition, and electrochemical deposition, for fabricating noble-metal-atoms-coated carbon-nanostructure-based electrodes for supercapacitors was given in US2015/0380174A1.

A method for fabricating thin-film carbon-based electrodes for flexible and transparent supercapacitors was disclosed in US2015/0332868A1. The active material was fabricated on a porous template using a chemical vapour deposition process.

CN103208373B discloses a preparation method for graphene-based electrodes for AC line filtering applications. The electrodes were fabricated by an electrochemical reduction method, including numerous chemical reactions.

An electric double-layer capacitor with a high-frequency response is disclosed in WO2015/138038A2. The active material was carbon nanotubes directly grown on the current collector using a catalyst-assisted technique at a heating environment. In some embodiments, binder materials were also used for preparing the electrode materials.

WO2007/053155A2 discloses electrophoretic deposition of CNTs on a metal substrate for high-density supercapacitors.

US2008/0232028A1 illustrates carbon nanosheets as an electrode material for supercapacitors. The carbon nanosheets were deposited directly onto conductive substrates using radio frequency plasma-assisted techniques.

US6168694B1 discloses methods for developing nitride, carbon nitride, and oxynitride-based electrodes for supercapacitors applications using a sol-gel process. The synthesis procedure comprises different steps, including chemical reactions, sintering, and hydrolysis.

CN104867703A discloses a method for preparing a metal sulphide/graphene/nickel sulphide composite thin-film material. The procedure involves multiple steps and a long treatment time (~36 hours) for the fabrication of the composite.

EP1547973A1 discloses a method for the fabrication of electrode material comprised of fine carbon powder coated with metal oxide, metal nitride, or metal carbide for supercapacitors. The procedure involves multiple steps, including chemical reactions and ultrasonic irradiation dehydration treatment for preparing the active material. Further, the active material was mixed with polymeric binders to prepare the electrodes.

US2014/0034906A1 discloses a method for manufacturing carbon nanotube-metal sulphide composites. The method includes post-synthetic ultra-centrifugation purification techniques for the selective area functionalization. The metal sulphide compounds are deposited onto the carbon nanotubes by atomic layer deposition techniques. The manufacturing of the carbon nanotube-metal sulphide nanostructure involves multiple steps, including purification and separation.

CN105789624A and CN105895861A disclose the application of array-type nickel-disulphide-carbon nanotube composite electrodes. The electrodes were designated as a Ni/Ni₃S₂/carbon nanotube-based structure or as a Ni/carbon nanotube/Ni₃S₂ based structure. A hydrothermal curing technique for the direct fabrication of electroactive material on a conductive substrate was used for the preparation of the electrode material. However, electrode fabrication involves multiple chemical processing steps and long processing time (more than 24 hours).

RU2660819C1 discloses a method for manufacturing supercapacitor electrodes comprising the steps of applying a buffer layer, a catalytic bed, a dielectric layer, an insulating layer in the dielectric layer of the window matrix to a catalytic bed, deposition in the windows of arrays of vertically oriented carbon nanotubes, the functionalization of the surface of carbon nanotubes by oxygen-containing groups, the layer formation of polyaniline containing the isotope C-14, on vertically oriented carbon nanotubes by electrochemical deposition and annealing. US2013/074771A1 discloses a composite material including carbon nanotubes and/or nanofibers and composite intrinsic and doped silicon structures. The method includes depositing a catalytic layer on a surface of a substrate in a first processing chamber, processing the catalytic layer to form a plurality of nanoislands, forming a plurality of graphitic nanofilaments over the nanoislands in a second processing chamber. US2003/203139A1 discloses highly-orientated, multi-walled carbon nanotubes grown on an outer surface of a substrate initially disposed with a catalyst film or catalyst nano-dot by plasma enhanced hot film chemical vapour deposition. JP2003171108A discloses carbon nanotubes manufactured by chemical vapour phase growth by using fine particles of a sulfur compound of nickel as a catalyst and introducing hydrocarbon gas at high temperature. CN110033959A discloses a method for preparing a nickel sulfide-doped three-dimensional carbon nanotube foam composite material. The method comprises synthesizing a nickel-doped 3D carbon nanotube net as a substrate and using a hydrothermal reaction to form the nickel sulfide-soped 3D carbon nanotube foam composite. Rangom *et al.* disclose a method for the synthesis of carbon-nanotube-based electrodes for AC line-filtering applications [1]. The authors have used commercially available carbon nanotubes for preparing the active materials interfaced with an additional metal current collector.

Yoo *et al.* disclose a method for preparing carbon-nanotube-film-based electrodes for AC line filtering applications [2]. The active material preparation disclosed by Yoo *et al.* involves several chemical reactions and purifications, and the electrode is prepared using a binder.

Miller *et al.* disclose a graphene double layer capacitor for AC line-filtering applications. Graphene was directly deposited on the metal substrates using plasma-assisted deposition techniques at relatively high-temperature [3].

Zhang *et al.* [4] disclose a one-step synthesis of reduced graphene oxide/Ni₃S₂-based electrodes for high-performance supercapacitors, wherein the active materials are prepared by chemical methods. Chen *et al.* [5] demonstrate the preparation of sponge-like NiS/Ni₃S₂ hybrid nanosheets for supercapacitors using chemical treatment techniques. Tian *et al.* [6] disclose a method for constructing Ni₃S₂ wrapped by reduced graphene oxide on carbon cloth for a supercapacitor application. Anil Kumar *et al.* disclose a method for the direct growth of Ni₃S₂ on a current collector using chemical treatments [7]. Namdarian *et al.* disclose a chemical-treatment-assisted technique for the synthesis of reduced graphene oxide-Ni₃S₂ nanocubes for supercapacitor applications [8].

Dai Chao-Shuan et al.[9] discloses Ni₃S₂ nanoparticles with the diameters ranging from 10 to 80 nm are grown on the backbone of conductive multiwalled carbon nanotubes (MWCNTs). The method for the preparation of nanoparticles is a glucose-assisted hydrothermal method.

In all these cases, the preparation of the electrode material involves multiple process steps, a variety of different chemicals, and long processing time (more than 24 hours).

Among all these methods disclosed in the prior art, Ni₃S₂-based metal sulphides combined with a conductive carbon structure used as an electrode for energy storage devices provided higher capacity, better stability, and higher energy density compared to plain carbon-based electrodes. In these cases, the electrode preparation takes long (more than 10 hours), involves multiple processing steps, requires various chemical/binders/additives and/or requires high-temperature.

There is a need for an improved and/or a simplified process for the manufacture of hybrid binder-free electrodes for electrochemical energy storage devices, such as for electrochemical supercapacitors. Moreover, there is a need for hybrid binder-free electrodes that have improved properties when used in electrochemical supercapacitors.

### SUMMARY OF THE INVENTION

The inventors have found a novel method for the preparation of hybrid binder-free electrodes for electrochemical energy storage devices, preferably for electrochemical supercapacitors, that meets the above needs. The preparation method has the advantages of being simple, fast, low in energy consumption, and suitable for large-scale industrial production. The resulting hybrid binder-free electrodes have advantageous properties for application in both electrochemical energy storage devices and high-frequency filtering applications.

The scope of the present invention is defined by the appended set of claims. Accordingly, in a first aspect, the invention concerns a method for manufacturing a first hybrid binder-free electrode for electrochemical energy storage devices, preferably for electrochemical supercapacitors, said first hybrid binder-free electrode comprising, preferably consisting of, a conductive metal substrate (e.g. nickel) and carbon nanotubes attached to the conductive metal substrate, wherein each carbon nanotube has only one single-crystal metal nanoparticle positioned at its tip with a metal nitride top layer, the method comprising the following subsequent steps:
a) growing carbon nanotubes, preferably multi-walled carbon nanotubes, in a processing chamber (21) using a tip-growth mechanism, wherein each carbon nanotube has only one single-crystal metal nanoparticle positioned at its tip, on a conductive metal substrate (25a) in a direction perpendicular to the surface of the conductive metal substrate, wherein the metal of the single-crystal metal nanoparticles and the metal of the conductive metal substrate are the same;
b) providing the conductive metal substrate with the carbon nanotubes thereon, as obtained in step (a), in a processing chamber wherein the conductive metal substrate with the carbon nanotubes thereon is arranged on a conductive substrate holder that is not grounded, and evacuating said processing chamber to a pressure below 10 Pa;
c) supplying nitrogen-containing gas to the evacuated processing chamber of step (b) to obtain a partial pressure of the nitrogen-containing gas of between 10 Pa and 100 Pa;
d) creating a plasma inside the processing chamber using a high-frequency plasma generator;
e) allowing the single-crystal metal nanoparticles at the tips of the carbon nanotubes to interact with the nitrogen-containing plasma inside the processing chamber for a time period of between 5 and 105 s, leading to the formation of a metal nitride layer on top of the single-crystal metal nanoparticles;
f) turning off the high-frequency plasma generator; and
g) assuring that the temperature of the processing chamber drops below a threshold value, preferably below 35 °C, and subsequently venting the processing chamber to atmospheric pressure,
wherein no binder is applied during the process.

In a second aspect, the disclosure, not part of the claims, concerns the first hybrid binder-free electrode for electrochemical energy storage devices, preferably for electrochemical supercapacitors, obtainable by or obtained by steps (a) - (g) of the method as defined hereinbefore.

In a third aspect, the disclosure, not part of the claims, provides a first hybrid binder-free electrode for electrochemical energy storage devices, preferably for electrochemical supercapacitors, said first hybrid binder-free electrode comprising, preferably consisting of, a conductive metal substrate with carbon nanotubes having an average length of preferably 1 to 2 µm and an average diameter of preferably 50 to 100 nm attached thereto, wherein each carbon nanotube has only one single-crystal metal nanoparticle positioned at its tip with a metal nitride top layer,
wherein the carbon nanotubes point in a direction perpendicular to the surface of the conductive metal substrate,
wherein the metal of the single-crystal metal nanoparticles, the metal of the metal nitride layer and the metal of the conductive metal substrate are the same, and
wherein the metal nitride layer on top of the single-crystal metal nanoparticle core is preferably in the form of layered thin-film structures, with a total layer thickness between 1 to 10 nm.

In a fourth aspect, the invention concerns the use of the first hybrid binder-free electrode as defined hereinbefore or the first hybrid binder-free electrode obtainable by or obtained by steps (a) - (g) of the method as defined hereinbefore as an electrode for an electrochemical supercapacitor for high-frequency filtering applications, wherein said electrode preferably shows a phase angle above -75° and a capacitance above 400 µF at high frequencies (above 100 Hz) with a cut-off frequency above 6000 Hz.

In a preferred embodiment, the process as defined hereinbefore comprises additional steps that convert the first hybrid binder-free electrode for electrochemical energy storage devices, preferably for electrochemical supercapacitors, obtained in step (g), to a second hybrid binder-free electrode, comprising, preferably consisting of, a conductive metal substrate (e.g. nickel) and carbon nanotubes attached to the conductive metal substrate, wherein each carbon nanotube has only one single-crystal metal nanoparticle positioned at its tip with a metal sulphide top layer, a single-crystal metal nanoparticle core and a metal nitride layer in between the metal sulphide top layer and the single-crystal metal nanoparticle core, the method comprising the following additional subsequent steps following step (g):
h) providing the first hybrid binder-free electrode (12), as obtained in step (g), in another processing chamber (11) and evacuating said processing chamber (11) to a pressure below 100 Pa, preferably to a pressure below 1 Pa, using a vacuum pump (16) and a pressure gauge (15);
i) supplying sulphur-containing gas (13) to the evacuated processing chamber (11) of step (h) to obtain a partial pressure of the sulphur-containing gas of between 1 Pa and 1·10⁵ Pa;
j) setting the temperature inside the processing chamber (11) to between 25 and 300 °C, preferably to between 100 and 150 °C, with a heating element (14);
k) allowing the metal nitride covered single-crystal metal nanoparticles at the tips of the carbon nanotubes to interact with the sulphur-containing gas (13) inside the processing chamber (11), leading to the formation of a metal sulphide top layer on the metal nitride layer; and
l) assuring that the temperature of the processing chamber (11) drops below a threshold value, preferably below 35 °C, and subsequently venting the processing chamber (11) to atmospheric pressure,
wherein no binder is applied during the process.

In a fifth aspect, the disclosure, not part of the claims, concerns the second hybrid binder-free electrode for electrochemical energy storage devices, preferably for electrochemical supercapacitors, obtainable by or obtained by steps (a) - (l) of the methods as defined hereinbefore.

In a sixth aspect, the disclosure, not part of the claims, provides a second hybrid binder-free electrode for electrochemical energy storage devices, preferably for electrochemical supercapacitors, said second hybrid binder-free electrode comprising, preferably consisting of, a conductive metal substrate with carbon nanotubes having an average length of preferably 1 to 2 µm and an average diameter of preferably 50 to 100 nm attached thereto, wherein each carbon nanotube has only one single-crystal metal nanoparticle positioned at its tip with a metal sulphide top layer, a single-crystal metal nanoparticle core and a metal nitride layer in between the metal sulphide top layer and the single-crystal metal nanoparticle core,
wherein the carbon nanotubes point in a direction perpendicular to the surface of the conductive metal substrate,
wherein the metal of the single-crystal metal nanoparticles, the metal of the metal nitride layer, the metal of the metal sulphide layer and the metal of the conductive metal substrate are the same,
wherein the metal nitride layer on top of the single-crystal metal nanoparticle core is preferably in the form of layered thin-film structures, with a total layer thickness between 1 to 10 nm, and
wherein the metal sulphide layer on top of the metal nitride layer on the single-crystal metal nanoparticle core is preferably in the form of single-crystalline nanostructures, with individual crystallite size of between 50 to 100 nm.

In a seventh aspect, the invention concerns the use of the second hybrid binder-free electrode as defined hereinbefore or the second hybrid binder-free electrode obtainable by or obtained by steps (a) - (l) of the methods as defined hereinbefore as an electrode for a supercapacitor for electrochemical energy storage devices, wherein during charge-discharge cycling at a current density above 2 A·g⁻¹ said electrode after many cycles (more than 4000) preferably delivers a specific capacity of above 800 C·g⁻¹, and wherein the specific capacity retains above 80 % of the initial specific capacity (more than 600 C·g⁻¹) at higher current densities (more than 10 A·g⁻¹).

In another aspect of the disclosure, not part of the claims, the composite material is directly grown onto the conductive substrate, and the use of this material as a binder-free electrode for electrochemical energy storage devices, preferably for electrochemical supercapacitors, addresses the current challenges related to electrode fabrication.

In another aspect, the invention provides a first hybrid binder-free electrode for electrochemical energy storage devices obtained by the method of the present invention, preferably for electrochemical supercapacitors, said first hybrid binder-free electrode comprising, preferably consisting of, a conductive metal substrate with carbon nanotubes having an average length of preferably 1 to 2 µm and an average diameter of preferably 50 to 100 nm attached thereto, wherein each carbon nanotube has only one single-crystal metal nanoparticle positioned at its tip with a metal nitride top layer,
wherein the carbon nanotubes point in a direction perpendicular to the surface of the conductive metal substrate,
wherein the metal of the single-crystal metal nanoparticles, the metal of the metal nitride layer and the metal of the conductive metal substrate are the same, and
wherein the metal nitride layer on top of the single-crystal metal nanoparticle core is preferably in the form of layered thin-film structures, with a total layer thickness between 1 to 10 nm.

In another aspect, the disclosure, not part of the claims, concerns the use of the first hybrid binder-free electrode as defined hereinbefore or the first hybrid binder-free electrode obtainable by or obtained by steps (a) - (g) of the method as defined hereinbefore in an electrode for an electrochemical supercapacitor for high-frequency filtering applications, wherein said electrode preferably shows a phase angle above -75° and a capacitance above 400 µF at high frequencies (above 100 Hz) with a cut-off frequency above 6000 Hz.

In another aspect, the invention provides a second hybrid binder-free electrode for electrochemical energy storage devices obtained by the method of the invention, preferably for electrochemical supercapacitors, said second hybrid binder-free electrode comprising, preferably consisting of, a conductive metal substrate with carbon nanotubes having an average length of preferably 1 to 2 µm and an average diameter of preferably 50 to 100 nm attached thereto, wherein each carbon nanotube has only one single-crystal metal nanoparticle positioned at its tip with a metal sulphide top layer, a single-crystal metal nanoparticle core and a metal nitride layer in between the metal sulphide top layer and the single-crystal metal nanoparticle core,
wherein the carbon nanotubes point in a direction perpendicular to the surface of the conductive metal substrate,
wherein the metal of the single-crystal metal nanoparticles, the metal of the metal nitride layer, the metal of the metal sulphide layer and the metal of the conductive metal substrate are the same,
wherein the metal nitride layer on top of the single-crystal metal nanoparticle core is preferably in the form of layered thin-film structures, with a total layer thickness between 1 to 10 nm, and
wherein the metal sulphide layer on top of the metal nitride layer on the single-crystal metal nanoparticle core is preferably in the form of single-crystalline nanostructures, with individual crystallite size of between 50 to 100 nm.

In another aspect, the disclosure, not part of the claims, concerns the use of the second hybrid binder-free electrode as defined hereinbefore or the second hybrid binder-free electrode obtainable by or obtained by steps (a) - (l) of the methods as defined hereinbefore in an electrode for a supercapacitor for electrochemical energy storage devices, wherein during charge-discharge cycling at a current density above 2 A·g⁻¹ said electrode after many cycles (more than 4000) preferably delivers a specific capacity of above 800 C·g⁻¹, and wherein the specific capacity retains above 80 % of the initial specific capacity (more than 600 C·g⁻¹) at higher current densities (more than 10 A·g⁻¹).

Compared with the prior art, the present invention provides the following advantages:
- The carbon nanotubes are directly grown, using a tip-growth mechanism, on a conductive metal substrate in a direction perpendicular to the surface of the conductive metal substrate. The process, including the formation of a metal nitride and metal sulphide top layer on the single-crystal metal nanoparticles at the tips of carbon nanotubes, is performed without adding binders or other additive agents;
- The metal sulphide and metal nitride are formed only at the tip of the carbon nanotubes. The carbon nanotubes act as the intimate conductive channel between the current collector and the metal sulphide top and improve the diffusion-reaction during an electrochemical reaction;
- The electrode fabrication is done by a fast (less than 6 hours) two- or three-step procedure; and
- Fast epitaxial-type growth of metal nitride on top of the single-crystal metal nanoparticle at the tip of the carbon nanotube and control over the crystallinity of metal sulphide is possible. An intrinsically connected nanostructure, and intimate contact of metal nitride/sulphide to the current collector through carbon nanotubes improve the conversion reaction during an electrochemical process and enhance the capacity and stability of the material as an electrode for energy storage devices.

### BRIEF DESCRIPTION OF THE DRAWINGS

Figure 1 schematically depicts a processing chamber for the formation of a metal sulphide top layer on metal nitride covered single-crystal metal nanoparticle cores at the tips of carbon nanotubes.
Figure 2 schematically depicts a processing chamber for the growth of carbon nanotubes using a tip-growth mechanism on a conductive metal substrate in a direction perpendicular to the surface of the conductive metal substrate and a processing chamber for providing a metal nitride top layer on the single-crystal metal nanoparticles at the tips of the carbon nanotubes.
Figure 3(a) shows a TEM micrograph of nitrogen plasma-treated carbon nanotubes on a nickel foil. Figure 3(b) shows a TEM micrograph of the nitrogen-plasma treated carbon nanotubes after application of a nickel sulphide top layer onto the nickel nitride covered single-crystal nickel nanoparticle cores.
Figure 4 shows the experimental selected area electron diffraction (SAED) pattern originating from nickel sulphide, nickel nitride, nickel, and carbon, for identifying the crystal phases and corresponding simulated patterns for the identified nickel sulphide phase of Ni₃S₂, Ni₃N, Ni and carbon.

### DEFINITIONS

The term '*sccm*' as used in the context of the present invention is an abbreviation of '*standard cubic centimetre per minute*' and concerns a volumetric unit of flow measurement defined at the following standard conditions: a temperature of 273.15 K and a pressure of 100000 Pa.

The term '*binder*' as used herein means material that is responsible for holding the active material within the electrode together and maintaining a good contact, physical and electrical, between the active material and current collector. The binder typically is an inert, flexible, in electrolyte insoluble and electrochemically stable material, often a polymer.

The expression '*binder-free electrode*' is to be construed as an electrode that has been produced without the use of a binder and that does, therefore, not contain any binder.

The term '*conductive*' in '*conductive metal substrate*' and in '*conductive metal coil*' as used herein concerns the electrical conductivity.

### DETAILED DESCRIPTION OF THE INVENTION

In a first aspect, the invention concerns a method for manufacturing a first hybrid binder-free electrode for electrochemical energy storage devices, preferably for electrochemical supercapacitors, said first hybrid binder-free electrode comprising, preferably consisting of, a conductive metal substrate (e.g. nickel) and carbon nanotubes attached to the conductive metal substrate, wherein each carbon nanotube has only one single-crystal metal nanoparticle positioned at its tip with a metal nitride top layer, the method comprising the following subsequent steps:
a) growing carbon nanotubes, preferably multi-walled carbon nanotubes, in a processing chamber (21) using a tip-growth mechanism, wherein each carbon nanotube has only one single-crystal metal nanoparticle positioned at its tip, on a conductive metal substrate (25a) in a direction perpendicular to the surface of the conductive metal substrate, wherein the metal of the single-crystal metal nanoparticles and the metal of the conductive metal substrate are the same;
b) providing the conductive metal substrate with the carbon nanotubes thereon, as obtained in step (a), in a processing chamber wherein the conductive metal substrate with the carbon nanotubes thereon is arranged on a conductive substrate holder that is not grounded, and evacuating said processing chamber to a pressure below 10 Pa;
c) supplying nitrogen-containing gas to the evacuated processing chamber of step (b) to obtain a partial pressure of the nitrogen-containing gas of between 10 Pa and 100 Pa;
d) creating a plasma inside the processing chamber using a high-frequency plasma generator;
e) allowing the single-crystal metal nanoparticles at the tips of the carbon nanotubes to interact with the nitrogen-containing plasma inside the processing chamber for a time period of between 5 and 105 s, leading to the formation of a metal nitride layer on top of the single-crystal metal nanoparticles;
f) turning off the high-frequency plasma generator; and
g) assuring that the temperature of the processing chamber drops below a threshold value, preferably below 35 °C, and subsequently venting the processing chamber to atmospheric pressure,
wherein no binder is applied during the process.

In step (g), the first hybrid binder-free electrode is obtained.

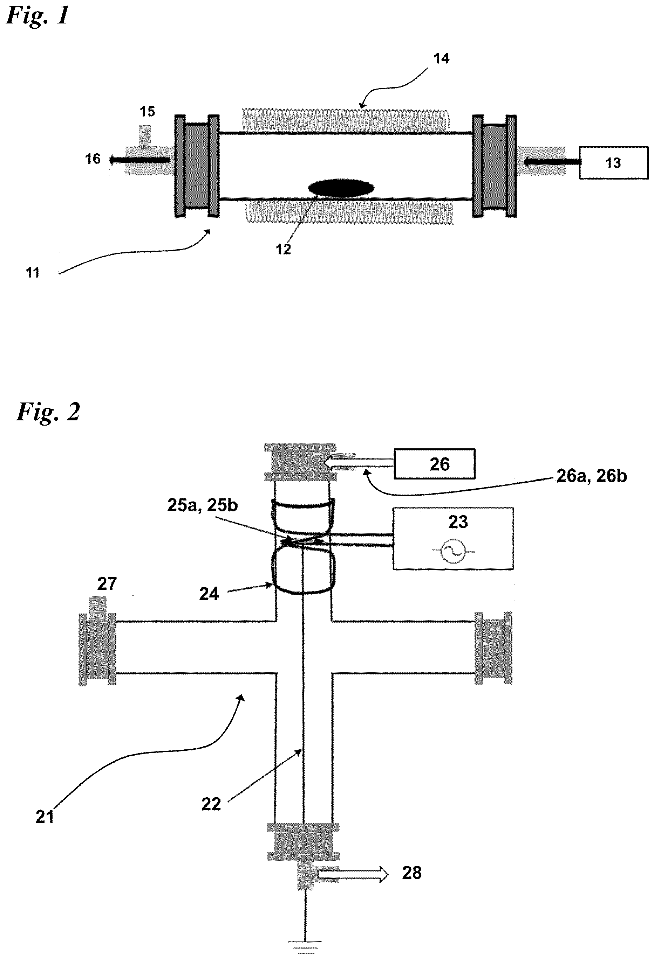

The numbers between brackets (..) correspond to the numbers in Figures 1 and 2, wherein (11) represents a processing chamber, (12) represents carbon nanotubes on the conductive metal substrate, (13) represents (means for supplying) sulphur-containing gas, (14) represents a heating element, such as an external heating coil, (15) represents a pressure gauge, (16) represents a vacuum pump, (21) represents another processing chamber, (22) represents a substrate holder, (23) represents a high-frequency plasma generator, such as a radio-frequency (RF) plasma generator, (24) represents a conductive metal coil, (25a) represents a conductive metal substrate, (25b) represents a conductive metal substrate with carbon nanotubes thereon, (26) represents means for supplying gas, (26a) represents carbon-containing gas, (26b) represents nitrogen-containing gas, (27) represents a pressure gauge and (28) represents a vacuum pump.

In a second aspect, the disclosure, not part of the claims, concerns the first hybrid binder-free electrode for electrochemical energy storage devices, preferably for electrochemical supercapacitors, obtainable by or obtained by steps (a) - (g) of the methods as defined hereinbefore.

In a third aspect, the disclosure, not part of the claims, provides a first hybrid binder-free electrode for electrochemical energy storage devices, preferably for electrochemical supercapacitors, said first hybrid binder-free electrode comprising, preferably consisting of, a conductive metal substrate with carbon nanotubes having an average length of preferably 1 to 2 µm and an average diameter of preferably 50 to 100 nm attached thereto, wherein each carbon nanotube has only one single-crystal metal nanoparticle positioned at its tip with a metal nitride top layer,
wherein the carbon nanotubes point in a direction perpendicular to the surface of the conductive metal substrate,
wherein the metal of the single-crystal metal nanoparticles, the metal of the metal nitride layer and the metal of the conductive metal substrate are the same, and
wherein the metal nitride layer on top of the single-crystal metal nanoparticle core is preferably in the form of layered thin-film structures, with a total layer thickness between 1 to 10 nm.

In a fourth aspect, the invention concerns the use of the first hybrid binder-free electrode as defined hereinbefore or the first hybrid binder-free electrode obtainable by or obtained by steps (a) - (g) of the methods as defined hereinbefore as an electrode for an electrochemical supercapacitor for high-frequency filtering applications, wherein said electrode preferably shows a phase angle above -75° and a capacitance above 400 µF at high-frequencies (above 100 Hz) with a cut-off frequency above 6000 Hz.

In a preferred embodiment, the process as defined hereinbefore comprises additional steps that convert the first hybrid binder-free electrode obtained in step (g) to a second hybrid binder-free electrode for electrochemical energy storage devices, preferably for electrochemical supercapacitors, comprising, preferably consisting of, a conductive metal substrate (e.g., nickel) and carbon nanotubes attached to the conductive metal substrate, wherein each carbon nanotube has only one single-crystal metal nanoparticle positioned at its tip with a metal sulphide top layer, a single-crystal metal nanoparticle core and a metal nitride layer in between the metal sulphide top layer and the single-crystal metal nanoparticle core, the method comprising the following additional subsequent steps following step (g):
h) providing the first hybrid binder-free electrode (12), as obtained in step (g), in another processing chamber (11) and evacuating said processing chamber (11) to a pressure below 100 Pa, preferably to a pressure below 1 Pa, using a vacuum pump (16) and a pressure gauge (15);
i) supplying sulphur-containing gas (13) to the evacuated processing chamber (11) of step (h) to obtain a partial pressure of the sulphur-containing gas of between 1 Pa and 1·10⁵ Pa;
j) setting the temperature inside the processing chamber (11) to between 25 and 300 °C, preferably to between 100 and 150 °C, with a heating element (14);
k) allowing the metal nitride covered single-crystal metal nanoparticles at the tips of the carbon nanotubes to interact with the sulphur-containing gas (13) inside the processing chamber (11), leading to the formation of a metal sulphide top layer on the metal nitride layer; and
l) assuring that the temperature of the processing chamber (11) drops below a threshold value, preferably below 35 °C, and subsequently venting the processing chamber (11) to atmospheric pressure,
wherein no binder is applied during the process.

In a fifth aspect, the disclosure, not part of the claims, concerns the second hybrid binder-free electrode for electrochemical energy storage devices, preferably for electrochemical supercapacitors, obtainable by or obtained by steps (a) - (l) of the methods as defined hereinbefore.

In a sixth aspect, the disclosure, not part of the claims, provides a second hybrid binder-free electrode for electrochemical energy storage devices, preferably for electrochemical supercapacitors, said second hybrid binder-free electrode comprising, preferably consisting of, a conductive metal substrate with carbon nanotubes having an average length of preferably 1 to 2 µm and an average diameter of preferably 50 to 100 nm attached thereto, wherein each carbon nanotube has only one single-crystal metal nanoparticle positioned at its tip with a metal sulphide top layer, a single-crystal metal nanoparticle core and a metal nitride layer in between the metal sulphide top layer and the single-crystal metal nanoparticle core,
wherein the carbon nanotubes point in a direction perpendicular to the surface of the conductive metal substrate,
wherein the metal of the single-crystal metal nanoparticles, the metal of the metal nitride layer, the metal of the metal sulphide layer and the metal of the conductive metal substrate are the same,
wherein the metal nitride layer on top of the single-crystal metal nanoparticle core is preferably in the form of layered thin-film structures, with a total layer thickness between 1 to 10 nm, and
wherein the metal sulphide layer on top of the metal nitride layer on the single-crystal metal nanoparticle core is preferably in the form of single-crystalline nanostructures, with individual crystallite size of between 50 to 100 nm.

In a seventh aspect, the invention concerns the use of the second hybrid binder-free electrode as defined hereinbefore or the second hybrid binder-free electrode obtainable by or obtained by steps (a) - (l) of the methods as defined hereinbefore as or in an electrode for a supercapacitor for electrochemical energy storage devices, wherein during charge-discharge cycling at a current density above 2 A·g⁻¹ said electrode after many cycles (more than 4000) preferably delivers a specific capacity of above 800 C·g⁻¹, and wherein the specific capacity retains above 80 % of the initial specific capacity (more than 600 C·g⁻¹) at higher current densities (more than 10 A·g⁻¹).

In a preferred embodiment, steps (b) - (g) are performed in the same processing chamber (21) as used in step (a). Accordingly, in a preferred embodiment, the invention concerns the method for manufacturing the first or second hybrid binder-free electrode for electrochemical energy storage devices, as defined hereinbefore, comprising the following subsequent steps:
a) growing carbon nanotubes, preferably multi-walled carbon nanotubes, in a processing chamber (21) using a tip-growth mechanism, wherein each carbon nanotube has only one single-crystal metal nanoparticle positioned at its tip, on a conductive metal substrate (25a) in a direction perpendicular to the surface of the conductive metal substrate, wherein the metal of the single-crystal metal nanoparticles and the metal of the conductive metal substrate are the same;
b) providing the conductive metal substrate with the carbon nanotubes thereon (25b), as obtained in step (a), in the same processing chamber (21) wherein the conductive metal substrate with the carbon nanotubes thereon (25b) is arranged on a conductive substrate holder (22) that is not grounded, and evacuating said processing chamber (21) with a vacuum pump (28) and a pressure gauge (27) to a pressure below 10 Pa;
c) supplying nitrogen-containing gas (26b) to the evacuated processing chamber (21) of step (b) to obtain a partial pressure of the nitrogen-containing gas of between 10 Pa and 100 Pa;
d) creating a plasma inside the processing chamber (21) using a high-frequency plasma generator (23);
e) allowing the single-crystal metal nanoparticles at the tips of the carbon nanotubes to interact with the nitrogen-containing plasma inside the processing chamber (21) for a time period of between 5 and 105 s, leading to the formation of a metal nitride layer on top of the single-crystal metal nanoparticles;
f) turning off the high-frequency plasma generator (23); and
g) assuring that the temperature of the processing chamber (21) drops below a threshold value, preferably below 35 °C, and subsequently venting the processing chamber (21) to atmospheric pressure,
wherein no binder is applied during the process.

In another aspect, the invention provides a first hybrid binder-free electrode for electrochemical energy storage devices obtained by the method of the present invention, preferably for electrochemical supercapacitors, said first hybrid binder-free electrode comprising, preferably consisting of, a conductive metal substrate with carbon nanotubes having an average length of preferably 1 to 2 µm and an average diameter of preferably 50 to 100 nm attached thereto, wherein each carbon nanotube has only one single-crystal metal nanoparticle positioned at its tip with a metal nitride top layer,
wherein the carbon nanotubes point in a direction perpendicular to the surface of the conductive metal substrate,
wherein the metal of the single-crystal metal nanoparticles, the metal of the metal nitride layer and the metal of the conductive metal substrate are the same, and
wherein the metal nitride layer on top of the single-crystal metal nanoparticle core is preferably in the form of layered thin-film structures, with a total layer thickness between 1 to 10 nm.

In another aspect, the disclosure, not part of the claims, concerns the use of the first hybrid binder-free electrode as defined hereinbefore or the first hybrid binder-free electrode obtainable by or obtained by steps (a) - (g) of the methods as defined hereinbefore in an electrode for an electrochemical supercapacitor for high-frequency filtering applications, wherein said electrode preferably shows a phase angle above -75° and a capacitance above 400 µF at high-frequencies (above 100 Hz) with a cut-off frequency above 6000 Hz.

In another aspect, the invention provides a second hybrid binder-free electrode for electrochemical energy storage devices obtained by the method of the invention, preferably for electrochemical supercapacitors, said second hybrid binder-free electrode comprising, preferably consisting of, a conductive metal substrate with carbon nanotubes having an average length of preferably 1 to 2 µm and an average diameter of preferably 50 to 100 nm attached thereto, wherein each carbon nanotube has only one single-crystal metal nanoparticle positioned at its tip with a metal sulphide top layer, a single-crystal metal nanoparticle core and a metal nitride layer in between the metal sulphide top layer and the single-crystal metal nanoparticle core,
wherein the carbon nanotubes point in a direction perpendicular to the surface of the conductive metal substrate,
wherein the metal of the single-crystal metal nanoparticles, the metal of the metal nitride layer, the metal of the metal sulphide layer and the metal of the conductive metal substrate are the same,
wherein the metal nitride layer on top of the single-crystal metal nanoparticle core is preferably in the form of layered thin-film structures, with a total layer thickness between 1 to 10 nm, and
wherein the metal sulphide layer on top of the metal nitride layer on the single-crystal metal nanoparticle core is preferably in the form of single-crystalline nanostructures, with individual crystallite size of between 50 to 100 nm.

In another aspect, the disclosure, not part of the claims, concerns the use of the second hybrid binder-free electrode as defined hereinbefore or the second hybrid binder-free electrode obtainable by or obtained by steps (a) - (l) of the methods as defined hereinbefore in an electrode for a supercapacitor for electrochemical energy storage devices, wherein during charge-discharge cycling at a current density above 2 A·g⁻¹ said electrode after many cycles (more than 4000) preferably delivers a specific capacity of above 800 C·g⁻¹, and wherein the specific capacity retains above 80 % of the initial specific capacity (more than 600 C·g⁻¹) at higher current densities (more than 10 A·g⁻¹).

The carbon nanotubes grown in step (a) are preferably multi-walled carbon nanotubes. These carbon nanotubes have a length (largest dimension) and a diameter (smallest dimension). The carbon nanotubes are grown in a direction perpendicular to the surface of the conductive metal substrate. This means that the central axis of the carbon nanotubes, along the length or the largest dimension, points in a direction perpendicular to the surface of the conductive metal substrate.

The average length of the carbon nanotubes grown in step (a) is preferably larger than 1 µm. More preferably, the average length of the carbon nanotubes grown in step (a) is between 1 and 2 µm. The average diameter of the carbon nanotubes grown in step (a) is preferably 100 nm or smaller. More preferably, the average diameter of the carbon nanotubes grown in step (a) is between 50 and 100 nm.

The carbon nanotubes grown in step (a) have only one single-crystal metal nanoparticle positioned at their tips. This means a single-crystal metal nanoparticle positioned at the outer end of the carbon nanotube that is not attached to the conductive metal substrate.

The metal nitride top layer formed in step (e) on the single-crystal metal nanoparticle preferably is in the form of thin layer nanostructures with a total layer thickness of between 1 to 10 nm, preferably between 3 and 7 nm, such as about 5 nm.

The metal sulphide top layer formed in step (k) on the single-crystal metal nanoparticle preferably is in the form of single-crystalline nanostructures with individual crystallite sizes of between 50 and 100 nm.

Without wishing to be bound by any theory, the inventors believe that the metal nitride layer serves as a diffusion layer for the metal from the single-crystal metal nanoparticle during the formation of the metal sulphide top layer. Accordingly, the metal sulphide is formed on top of the metal nitride instead of from conversion of the metal nitride to metal sulphide. Moreover, again without wishing to be bound by any theory, the inventors believe that the metal nitride layer serves as a single-crystal template, enabling the subsequent epitaxial growth of a single-crystal metal sulphide structure.

The metal of the conductive metal substrate is preferably catalytic towards carbon nanotube synthesis. In a preferred embodiment, the metal of the conductive metal substrate has (substantial) carbon solubility. In a very preferred embodiment, the metal of the conductive metal substrate is chosen from the group consisting of nickel, cobalt and copper.

In a very preferred embodiment, the metal of the conductive metal substrate is nickel and the metal nitride is nickel nitride (Ni₃N). In another very preferred embodiment, the metal of the conductive metal substrate is nickel, the metal nitride is nickel nitride (Ni₃N) and the metal sulphide is trinickel disulphide (Ni₃S₂). The thickness of the conductive metal substrate is preferably 1 µm or more, more preferably about 25 µm.

The conductive metal substrate can be a solid substrate, a porous substrate or a foam.

In a typical embodiment, processing chamber (11) is a long cylindrical quartz tube attached to a heating system, preferably an external heating coil.

The metal of the single-crystal metal nanoparticles and the metal of the conductive metal substrate are the same. The metal nitride is formed in step (e) by contacting the metal of the single crystal metal nanoparticle with a nitrogen-containing plasma. The metal sulphide is formed in step (k) by contacting the metal of the single-crystal metal nanoparticles with a sulphur-containing gas. As appreciated by the skilled person, the metal in the metal sulphide and in the metal nitride is therefore also identical to the metal of the single-crystal metal nanoparticles and the metal of the conductive metal substrate.

In a preferred embodiment, the nitrogen-containing gas applied in step (c) is selected from the group consisting of nitrogen, ammonia, and nitrogen dioxide. More preferably, the nitrogen-containing gas applied in step (c) is molecular nitrogen (N₂). Most preferably, the nitrogen-containing gas applied in step (c) is molecular nitrogen with a purity greater than 99 %, wherein the partial pressure of the molecular nitrogen inside the processing chamber is between 10 and 100 Pa, preferably between 10 and 30 Pa. Best results in terms of uniformity are obtained when only one gas is used.

In a preferred embodiment, the interaction time in step (e) is between 5 and 105 s, preferably between 20 and 40 s, such as about 30 s, preferably applied in increments of 10 s with intermediate cooling.

In an embodiment, the plasma inside the processing chamber, e.g. processing chamber (21), is created in step (d) at low power, preferably at a power of between 50 and 400 W, such as about 150 W.

The high-frequency plasma generator (23), preferably a radio-frequency (RF) plasma generator (such as at 13.56 MHz), applied in step (d) is coupled, preferably using inductive coupling, to a conductive metal coil or antenna (24), preferably a copper coil or copper antenna, wrapped around the processing chamber (21).

As depicted in Figure 2, the processing chamber (21) preferably takes the form of a cross-type glass tube. Preferably, the processing chamber (21) is a dielectric chamber with tubes made of borosilicate glass.

In a preferred embodiment, the sulphur-containing gas (13) applied in step (i) is hydrogen sulphide (H₂S) and the partial pressure of the sulphur-containing gas is between 8·10⁴ and 9·10⁴ Pa. Best results in terms of uniformity are obtained when only one gas is used.

In a preferred embodiment, the interaction time in step (k) is between 30 and 240 minutes, preferably between 150 and 200 minutes.

In a preferred embodiment, the carbon nanotubes are grown in step (a) using a vapour deposition tip-growth method.

In a very preferred embodiment, the carbon nanotubes are grown in step (a) using a plasma vapour deposition tip-growth method comprising the following steps:
I) arranging the conductive metal substrate (25a) on a grounded conductive substrate holder (22) in the processing chamber (21);
II) evacuating the processing chamber (21) to obtain a pressure below 10 Pa;
III) supplying a carbon-containing gas (26a) into the processing chamber to obtain a partial pressure of the carbon-containing gas inside the processing chamber (21) of between 10 Pa and 1000 Pa;
IV) creating a plasma inside the processing chamber using a high-frequency plasma generator (23);
V) allowing the plasma inside the processing chamber (21) to interact with the conductive metal substrate (25a) to allow growth of the carbon nanotubes on the conductive metal substrate in a direction perpendicular to the surface of the conductive metal substrate, wherein each carbon nanotube has only one single-crystal metal nanoparticle positioned at its tip;
VI) turning off the high-frequency plasma generator (23);
VII) assuring the temperature of the conductive substrate holder (22) to drop below a threshold value, preferably below 35 °C; and
VIII) venting the processing chamber (21) to atmospheric pressure.

In an embodiment, the growth of the carbon nanotubes in step (V) is performed continuously for a duration of between 1 and 60 minutes, preferably about 4 minutes.

The carbon-containing gas (26a) applied in step (III) is preferably selected from the group consisting of methane, carbon dioxide, ethylene, and acetylene. More preferably, the carbon-containing gas (26a) in step (III) is methane. Most preferably, the carbon-containing gas (26a) in step (III) is methane with a purity greater than 99 % wherein the partial pressure of the methane inside the processing chamber (21) is between 20 and 60 Pa after the methane supply.

In an embodiment, the plasma inside the processing chamber (21) is created in step (IV) at high power, preferably between 500-1000 W.

The high-frequency plasma generator (23), preferably a radio-frequency (RF) plasma generator (such as at 13.56 MHz), applied in step (IV) is coupled, preferably using inductive coupling, to a conductive metal coil or antenna (24), preferably a copper coil or copper antenna, wrapped around the processing chamber (21).

In a typical embodiment, the plasma vapour deposition tip-growth method is performed as follows. The conductive metal substrate (25a) is placed on a conductive substrate holder (22), which is electrically grounded during the process. The processing chamber (21) is evacuated to a pressure of below 10 Pa using a rotary vacuum pump (28). The pressure inside the processing chamber (21) is measured using a pressure gauge (27). Carbon-containing gas (26a) is supplied to the processing chamber (21) for the growth process and is fed through a mass flow controller (26) at a flow rate not less than 1 sccm. The plasma is created at a power typically not higher than 1000 W for the growth of the carbon nanotubes. The plasma vapour deposition tip-growth process typically lasts not less than 1 min. The processing chamber (21) and the conductive substrate holder (22) are not subjected to any external heating step during the growth process. The conductive substrate holder is heated due to the plasma heating effects during the growth itself. The conductive substrate holder (22) is taken out after the plasma vapour deposition tip-growth process and after the temperature of the substrate holder has dropped below a threshold temperature of below 35 °C.

Thus, the invention has been described by reference to certain embodiments discussed above. It will be recognized that these embodiments are susceptible to various modifications and alternative forms well known to those of skill in the art.

Furthermore, for a proper understanding of this document and its claims, it is to be understood that the verb '*to comprise*' and its conjugations are used in its non-limiting sense to mean that items following the word are included, but items not specifically mentioned are not excluded. In addition, reference to an element by the indefinite article '*a*' or '*an*' does not exclude the possibility that more than one of the element is present, unless the context clearly requires that there be one and only one of the elements. The indefinite article '*a*' or '*an*' thus usually means '*at least one*'.

The following examples serve to demonstrate the preferred embodiments of the present invention and should not be interpreted as limiting the scope of the invention.

### EXAMPLES:

### Example 1

The method of the invention was applied to prepare a first hybrid binder-free electrode according to the invention. This example relates to the preparation of a binder-free electrode for electrochemical supercapacitors for high-frequency applications. In this example, metallic nickel foil with a thickness of 25 µm and a diameter of 14 mm was used as the conductive metal substrate.

In a first step, multi-walled carbon nanotubes, wherein each carbon nanotube has only one single-crystal nickel nanoparticle positioned at its tip, were grown on the nickel foil using a plasma-assisted deposition system via a tip-growth mechanism. A setup as depicted in Figure 2 was used.

The nickel foil as the conductive metal substrate (25a) was placed on a conductive substrate holder (22) inside a plasma processing chamber (21) made of borosilicate glass in the middle of a conductive metal coil (24) wrapped around the processing chamber (21). The conductive substrate holder (22) was electrically grounded during the growth. Then, the processing chamber (21) was evacuated with a rotary vacuum pump (28) and a pressure gauge (27) to a pressure below 10 Pa. Subsequently, methane gas (26a) was leaked into the processing chamber (21) as the carbon precursor at a flow rate of 20 sccm through a mass flow controller (26). After supply of the methane gas (26a), the pressure inside the processing chamber was 30 Pa.

After establishing the atmosphere for carbon nanotube growth, an RF (13.56 MHz) plasma generator (23) was turned on at power 800 W. The RF plasma generator (23) was inductively coupled to the conductive metal coil (24). After 4 minutes, the RF plasma generator and the methane supply were turned off. The temperature of the sample holder reached 700-800 °C during the growth process due to the plasma heating effects. After an additional 10 minutes, the temperature of the sample holder (22) was cooled to below a threshold temperature of 35 °C. In this first step, a nickel foil with carbon nanotubes thereon (25b), wherein each carbon nanotube has only one single-crystal metal nanoparticle positioned at its tip, was obtained.

In a second step, the nickel foil with the grown carbon nanotubes thereon (25b) was exposed to nitrogen plasma-treatment in the same plasma processing chamber (21) in the middle of the conductive metal coil (24) wrapped around the processing chamber (21). At this stage, the conductive substrate holder (22) was not electrically grounded. The processing chamber (21) was evacuated with a rotary vacuum pump (28) using a pressure gauge (27) to a pressure below 10 Pa. Subsequently, molecular nitrogen (N₂) gas (26b) was leaked into the processing chamber (21) as the treatment gas. After the supply of the nitrogen gas (26b), the pressure inside the processing chamber was 20 Pa. Then the RF (13.56 MHz) plasma generator (23) was turned on at a power 150 W and turned off after 10 s. After a cooling period of 10 s, the plasma generator (23) was turned on again at a power 150 W and turned off after 10 s. This process was repeated once again, and the nitrogen supply was turned off. Accordingly, the total effective plasma treating time was 30 s. After an additional 10 minutes, the processing chamber was vented and opened to take out the sample. Thus, a first hybrid binder-free electrode according to the invention was obtained.

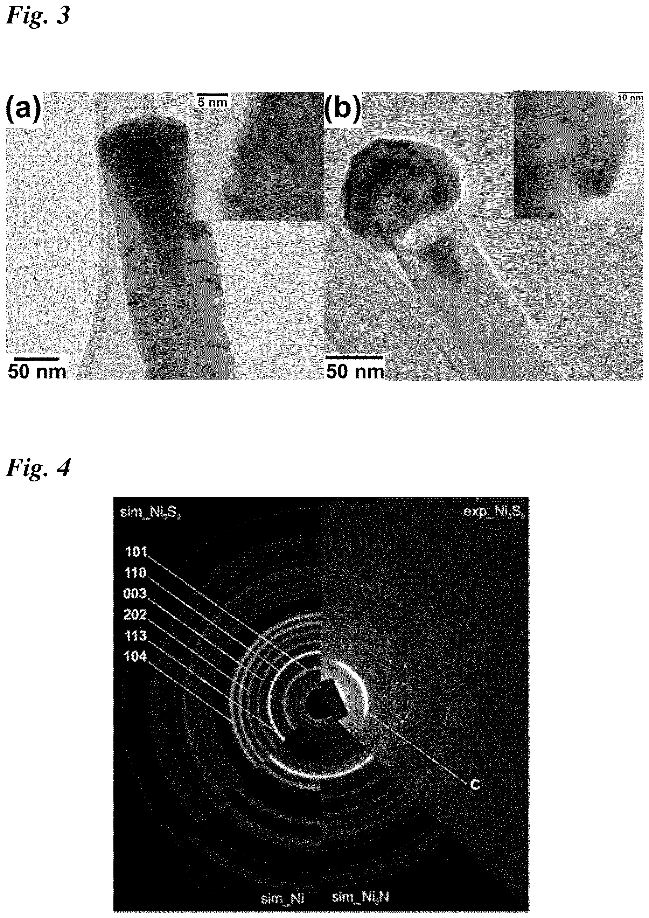

Figure 3(a) presents a TEM micrograph of an individual carbon nanotube obtained after the nitrogen plasma-treatment in the second step. The structure of the product is similar to the structure obtained after the first step, however, a layer of single-crystalline nickel nitride (Ni₃N) was observed on top of the nickel nanoparticle.

The resulting first hybrid binder-free electrode was used in an electrochemical setup for a supercapacitor and tested as an electrode for high-frequency filtering applications, and exhibited a phase angle above -75° and a capacitance above 400 µF at high-frequencies (above 100 Hz) with a cut-off frequency above 6000 Hz.

### Example 2

The method of the invention was applied to prepare a second hybrid binder-free electrode according to the invention. This second example relates the preparation of a hybrid-binder-free electrode for electrochemical energy storage devices. The first hybrid binder-free electrode obtained in the second step of Example 1 was subjected to a third step. In the third step, the nickel foil with the nitrogen plasma-treated carbon nanotubes (12), wherein each carbon nanotube has only one single-crystal metal nanoparticle covered with a single-crystalline nickel nitride layer positioned at its tip, was placed in a thermal treatment processing chamber (11), as depicted in Figure 1, for the growth of nickel sulphide. The processing chamber (11) was evacuated to a pressure of below 1 Pa using a vacuum pump (16) and a pressure gauge (15). Then, hydrogen sulphide (H₂S) gas was leaked into the processing chamber as the sulphur-containing gas (13), and the pressure inside the processing chamber (11) was kept at about 9·10⁴ Pa. The temperature of the chamber was elevated to 125 °C at a rate of 6 °C/minutes using an external heating coil (14), and annealed for 180 minutes. Afterwards, the processing chamber (11) was let to cool down to room temperature, and the H₂S gas was pumped out using the vacuum pump (16). During the third step, the nickel sulphide successfully formed on top of the nickel nitride layer from the single-crystal nickel nanoparticle. The process resulted in a top layer of nickel sulphide on a single-crystal nickel nanoparticle core with a nickel nitride layer in between, without destroying the underlying carbon nanotubes.

Figure 3(b) shows a TEM micrograph of the material obtained after the three steps. The nickel sulphide is only attached to the single-crystal nickel nanoparticle core covered with nickel nitride. The composite material consists of nickel sulphide, a nickel core and nickel nitride in between, carbon nanotubes and a nickel foil. There were no other sulphur-containing nanoparticles observed on the backbone of the carbon nanotube. As the nickel substrate was completely covered with carbon structures, it was not affected by the H₂S gas. The nickel sulphide was formed from the single-crystal nickel nanoparticle on top of the nickel nitride layer in the form of single-crystalline nanostructures of Ni₃S₂. The obtained hybrid binder-free electrode is therefore confirmed as having a Ni₃S₂/Ni₃N/Ni/carbon nanotube hybrid hierarchical structure.

The second hybrid binder-free electrode was used as a supercapacitor and tested in an electrochemical test setup. As an electrode for a supercapacitor for electrochemical energy storage devices, the second hybrid binder-free electrode delivered during charge-discharge cycling at a current density above 2 A·g⁻¹ after many cycles (more than 4000) a specific capacity of above 800 C·g⁻¹, and the specific capacity retained above 80 % of the initial specific capacity (more than 600 C·g⁻¹) at higher current densities (more than 10 A·g⁻¹).

### REFERENCES

1. Rangom, Y.; Tang, X. (Shirley); Nazar, L. F. Carbon Nanotube-Based Supercapacitors with Excellent ac Line Filtering and Rate Capability via Improved Interfacial Impedance. ACS Nano 2015, 9, 7248-7255, doi:10.1021/acsnano.5b02075.
2. Yoo, Y.; Kim, M. S.; Kim, J. K.; Kim, Y. S.; Kim, W. Fast-response supercapacitors with graphitic ordered mesoporous carbons and carbon nanotubes for AC line filtering. J. Mater. Chem. A 2016, doi:10.1039/c6ta00921b.
3. Miller, J. R.; Outlaw, R. A.; Holloway, B. C. Graphene double-layer capacitor with ac line-filtering performance. Science (80-. ). 2010, doi: 10.1126/science. 1194372.
4. Zhang, Z.; Zhao, C.; Min, S.; Qian, X. A facile one-step route to RGO/Ni3S2 for high-performance supercapacitors. Electrochim. Acta 2014, 144, 100-110, doi:10.1016/j.electacta.2014.08.038.
5. Chen, F.; Wang, H.; Ji, S.; Linkov, V.; Wang, R. High-performance all-solid-state asymmetric supercapacitors based on sponge-like NiS/Ni3S2 hybrid nanosheets. Mater. Today Energy 2019, 11, 211-217, doi:10.1016/j.mtener.2018.12.002.
6. Tian, Z.; Yin, J.; Wang, X.; Wang, Y. Construction of Ni3S2 wrapped by rGO on carbon cloth for flexible supercapacitor application. J. Alloys Compd. 2019, 777, 806-811, doi:10.1016/j.jallcom.2018.10.119.
7. Anil Kumar, Y.; Dasha Kumar, K.; Kim, H. J. A novel electrode for supercapacitors: Efficient PVP-assisted synthesis of Ni3S2 nanostructures grown on Ni foam for energy storage. Dalt. Trans. 2020, doi:10.1039/d0dt00191k.
8. Namdarian, A.; Tabrizi, A. G.; Maseleno, A.; Mohammadi, A.; Moosavifard, S. E. One-step synthesis of rGO-Ni3S2 nano-cubes composite for high-performance supercapacitor electrodes. Int. J. Hydrogen Energy. 2018, doi:10.1016j.ijhydene.2018.07.178.
9. Dai C.; Chien P.; Lin J.; Chou S.; Wu W.; Li P.; Wu K.; Lin T. Hierarchically Structured Ni3S2/Carbon Nanotube Composites as High Performance Cathode Materials for Asymmetric Supercapacitors. ACS Appl. Mater. Interfaces, 2013, 5, 12168-12174, doi: 10.1021/am404196s.

## Claims

1. A method for manufacturing a first hybrid binder-free electrode for electrochemical energy storage devices, preferably for electrochemical supercapacitors, said first hybrid binder-free electrode comprising, preferably consisting of, a conductive metal substrate and carbon nanotubes attached to the conductive metal substrate, wherein each carbon nanotube has only one single-crystal metal nanoparticle positioned at its tip with a metal nitride top layer, the method comprising the following subsequent steps:
a) growing carbon nanotubes, preferably multi-walled carbon nanotubes, in a processing chamber (21) using a tip-growth mechanism, wherein each carbon nanotube has only one single-crystal metal nanoparticle positioned at its tip, on a conductive metal substrate (25a) in a direction perpendicular to the surface of the conductive metal substrate, wherein the metal of the single-crystal metal nanoparticles and the metal of the conductive metal substrate are the same;
b) providing the conductive metal substrate with the carbon nanotubes thereon, as obtained in step (a), in a processing chamber wherein the conductive metal substrate with the carbon nanotubes thereon is arranged on a conductive substrate holder that is not grounded, and evacuating said processing chamber to a pressure below 10 Pa;
c) supplying nitrogen-containing gas to the evacuated processing chamber of step (b) to obtain a partial pressure of the nitrogen-containing gas of between 10 Pa and 100 Pa;
d) creating a plasma inside the processing chamber using a high-frequency plasma generator;
e) allowing the single-crystal metal nanoparticles at the tips of the carbon nanotubes to interact with the nitrogen-containing plasma inside the processing chamber for a time period of between 5 and 105 s, leading to the formation of a metal nitride layer on top of the single-crystal metal nanoparticles;
f) turning off the high-frequency plasma generator; and
g) assuring that the temperature of the processing chamber drops below a threshold value, preferably below 35 °C, and subsequently venting the processing chamber to atmospheric pressure,
wherein no binder is applied during the process.

2. Method according to claim 1, wherein the first hybrid binder-free electrode obtained in step (g) is converted to a second hybrid binder-free electrode for electrochemical energy storage devices, preferably for electrochemical supercapacitors, comprising, preferably consisting of, a conductive metal substrate and carbon nanotubes attached to the conductive metal substrate, wherein each carbon nanotube has only one single-crystal metal nanoparticle positioned at its tip with a metal sulphide top layer, a single-crystal metal nanoparticle core and a metal nitride layer in between the metal sulphide top layer and the single-crystal metal nanoparticle core, the method comprising the following additional subsequent steps following step (g):
h) providing the first hybrid binder-free electrode (12), as obtained in step (g), in another processing chamber (11) and evacuating said processing chamber (11) to a pressure below 100 Pa, preferably to a pressure below 1 Pa, using a vacuum pump (16) and a pressure gauge (15);
i) supplying sulphur-containing gas (13) to the evacuated processing chamber (11) of step (h) to obtain a partial pressure of the sulphur-containing gas of between 1 Pa and 1·10⁵ Pa;
j) setting the temperature inside the processing chamber (11) to between 25 and 300 °C, preferably to between 100 and 150 °C, with a heating element (14);
k) allowing the metal nitride covered single-crystal metal nanoparticles at the tips of the carbon nanotubes to interact with the sulphur-containing gas (13) inside the processing chamber (11), leading to the formation of a metal sulphide top layer on the metal nitride layer; and
l) assuring that the temperature of the processing chamber (11) drops below a threshold value, preferably below 35 °C, and subsequently venting the processing chamber (11) to atmospheric pressure,
wherein no binder is applied during the process.

3. Method according to claim 1, wherein the metal of the conductive metal substrate is nickel and the metal nitride is nickel nitride (Ni₃N).

4. Method according to claim 2, wherein the metal of the conductive metal substrate is nickel, the metal nitride is nickel nitride (Ni₃N) and wherein the metal sulphide is trinickel disulphide (Ni₃S₂).

5. Method according to any one of claims 1 - 4, wherein the nitrogen-containing gas applied in step (c) is selected from the group consisting of molecular nitrogen (N₂), ammonia, and nitrogen dioxide, preferably the nitrogen-containing gas applied in step (c) is molecular nitrogen, more preferably the nitrogen-containing gas applied in step (c) is molecular nitrogen with a purity greater than 99 % wherein the partial pressure of the molecular nitrogen inside the processing chamber is between 10 and 100 Pa, preferably between 10 and 30 Pa.

6. Method according to any one of claims 1-5, wherein the carbon nanotubes are grown in step (a) using a plasma vapour deposition tip-growth method comprising the following steps:
I) arranging the conductive metal substrate (25a) on a grounded conductive substrate holder (22) in the processing chamber (21);
II) evacuating the processing chamber (21) to obtain a pressure below 10 Pa;
III) supplying a carbon-containing gas (26a) into the processing chamber to obtain a partial pressure of the carbon-containing gas inside the processing chamber (21) of between 10 Pa and 1000 Pa;
IV) creating a plasma inside the processing chamber using a high-frequency plasma generator (23);
V) allowing the plasma inside the processing chamber (21) to interact with the conductive metal substrate (25a) to allow growth of the carbon nanotubes on the conductive metal substrate in a direction perpendicular to the surface of the conductive metal substrate, wherein each carbon nanotube has only one single-crystal metal nanoparticle positioned at its tip;
VI) turning off the high-frequency plasma generator (23);
VII) assuring the temperature of the conductive substrate holder (22) to drop below a threshold value, preferably below 35°C; and
VIII) venting the processing chamber (21) to atmospheric pressure.

7. Method according to claim 6, wherein the high-frequency plasma generator (23), preferably a radio-frequency (RF) plasma generator (13.56 MHz), applied in step (IV) is coupled, preferably using inductive coupling, to a conductive metal coil (24), preferably a copper coil, wrapped around the processing chamber (21).

8. Method according to claim 6 or 7,
• wherein the growth of the carbon nanotubes in step (V) is performed continuously for a duration of between 1 and 60 minutes; and/or
• wherein the plasma inside the processing chamber (21) is created in step (IV) at high power, preferably at a power between 500 and 1000 W.

9. Method according to any one of claims 6-8, wherein the carbon-containing gas (26a) applied in step (III) is selected from the group consisting of methane, carbon dioxide, ethylene, and acetylene, wherein the carbon-containing gas (26a) preferably is methane, more preferably methane with a purity greater than 99 % wherein the partial pressure of the methane inside the processing chamber (21) is between 20 and 60 Pa after the methane supply.

10. A first hybrid binder-free electrode for electrochemical energy storage devices obtained by the method of any one of claims 1-9, preferably for electrochemical supercapacitors, said first hybrid binder-free electrode comprising, preferably consisting of, a conductive metal substrate with carbon nanotubes having an average length of preferably 1 to 2 µm and an average diameter of preferably 50 to 100 nm attached thereto, wherein each carbon nanotube has only one single-crystal metal nanoparticle positioned at its tip with a metal nitride top layer,
wherein the carbon nanotubes point in a direction perpendicular to the surface of the conductive metal substrate,
wherein the metal of the single-crystal metal nanoparticles, the metal of the metal nitride layer and the metal of the conductive metal substrate are the same, and
wherein the metal nitride layer on top of the single-crystal metal nanoparticle core is preferably in the form of layered thin-film structures, with a total layer thickness between 1 to 10 nm.

11. First hybrid binder-free electrode according to claim 10, wherein the metal of the conductive metal substrate is nickel and wherein the metal nitride is nickel nitride (Ni₃N).

12. A second hybrid binder-free electrode for electrochemical energy storage devices obtained by the method of any one of claims 1-9, preferably for electrochemical supercapacitors, said second hybrid binder-free electrode comprising, preferably consisting of, a conductive metal substrate with carbon nanotubes having an average length of preferably 1 to 2 µm and an average diameter of preferably 50 to 100 nm attached thereto, wherein each carbon nanotube has only one single-crystal metal nanoparticle positioned at its tip with a metal sulphide top layer, a single-crystal metal nanoparticle core and a metal nitride layer in between the metal sulphide top layer and the single-crystal metal nanoparticle core,
wherein the carbon nanotubes point in a direction perpendicular to the surface of the conductive metal substrate,
wherein the metal of the single-crystal metal nanoparticles, the metal of the metal nitride layer, the metal of the metal sulphide layer and the metal of the conductive metal substrate are the same,
wherein the metal nitride layer on top of the single-crystal metal nanoparticle core is preferably in the form of layered thin-film structures, with a total layer thickness between 1 to 10 nm, and
wherein the metal sulphide layer on top of the metal nitride layer on the single-crystal metal nanoparticle core is preferably in the form of single-crystalline nanostructures, with individual crystallite size of between 50 to 100 nm.

13. Second hybrid binder-free electrode according to claim 12, wherein the metal of the conductive metal substrate is nickel, wherein the metal nitride is nickel nitride (Ni₃N) and wherein the metal sulphide is trinickel disulphide (Ni₃S₂).

14. Use of the first hybrid binder-free electrode according to claim 10 or 11 as an electrode for an electrochemical supercapacitor for high-frequency filtering applications, wherein said electrode preferably shows a phase angle above -75° and a capacitance above 400 µF at high frequencies (above 100 Hz) with a cut-off frequency above 6000 Hz.

15. Use of the second hybrid binder-free electrode according to claim 12 or 13 as an electrode for a supercapacitor for electrochemical energy storage devices, wherein during charge-discharge cycling at a current density above 2 A·g⁻¹ said electrode after many cycles (more than 4000) preferably delivers a specific capacity of above 800 C·g⁻¹, and wherein the specific capacity retains above 80 % of the initial specific capacity (more than 600 C·g⁻¹) at higher current densities (more than 10 A·g⁻¹).

## Patentansprüche

1. Verfahren zum Herstellen einer ersten hybriden bindemittelfreien Elektrode für elektrochemische Energiespeichervorrichtungen, vorzugsweise für elektrochemische Superkondensatoren, wobei die besagte erste hybride bindemittelfreie Elektrode ein leitfähiges Metallsubstrat und an dem leitfähigen Metallsubstrat befestigte Kohlenstoffnanoröhren umfasst, vorzugsweise daraus besteht, wobei jede Kohlenstoffnanoröhre nur ein an ihrer Spitze angeordnetes einkristallines Metallnanopartikel mit einer Metallnitrid-Oberschicht aufweist, wobei das Verfahren die folgenden nachfolgenden Schritte umfasst:
a) Züchten von Kohlenstoffnanoröhren, vorzugsweise mehrwandigen Kohlenstoffnanoröhren, in einer Verarbeitungskammer (21) unter Verwendung eines Spitzenwachstumsmechanismus, wobei jede Kohlenstoffnanoröhre nur ein an ihrer Spitze angeordnetes einkristallines Metallnanopartikel auf einem leitfähigen Metallsubstrat (25a) in einer Richtung senkrecht zu der Oberfläche des leitfähigen Metallsubstrats aufweist, wobei das Metall der einkristallinen Metallnanopartikel und das Metall des leitfähigen Metallsubstrats dasselbe sind;
b) Bereitstellen des leitfähigen Metallsubstrats mit den Kohlenstoffnanoröhren darauf, wie in Schritt (a) erhalten, in einer Verarbeitungskammer, wobei das leitfähige Metallsubstrat mit den darauf befindlichen Kohlenstoffnanoröhren auf einem leitfähigen Substrathalter angeordnet ist, der nicht geerdet ist, und Evakuieren der besagten Verarbeitungskammer auf einen Druck unter 10 Pa;
c) Zuführen von stickstoffhaltigem Gas in die evakuierte Verarbeitungskammer aus Schritt (b), um einen Partialdruck des stickstoffhaltigen Gases zwischen 10 Pa und 100 Pa zu erhalten;
d) Erzeugen eines Plasmas in der Verarbeitungskammer unter Verwendung eines Hochfrequenz-Plasmagenerators;
e) Ermöglichen, dass die einkristallinen Metallnanopartikel an den Spitzen der Kohlenstoffnanoröhren mit dem stickstoffhaltigen Plasma in der Verarbeitungskammer für einen Zeitraum zwischen 5 und 105 s in Wechselwirkung treten, was zu der Bildung einer Metallnitridschicht auf den einkristallinen Metallnanopartikeln führt;
f) Ausschalten des Hochfrequenz-Plasmagenerators;
g) Sicherstellen, dass die Temperatur der Verarbeitungskammer unter einen Schwellenwert fällt, vorzugsweise unter 35 °C, und anschließendes Entlüften der Verarbeitungskammer auf Atmosphärendruck,
wobei während des Verfahrens kein Bindemittel angewendet wird.

2. Verfahren nach Anspruch 1, wobei die in Schritt (g) erhaltene erste hybride bindemittelfreie Elektrode in eine zweite hybride bindemittelfreie Elektrode für elektrochemische Energiespeichervorrichtungen umgewandelt wird, vorzugsweise für elektrochemische Superkondensatoren, die ein leitfähiges Metallsubstrat und an dem leitfähigen Metallsubstrat befestigte Kohlenstoffnanoröhren umfasst, vorzugsweise daraus besteht, wobei jede Kohlenstoffnanoröhre nur ein an ihrer Spitze angeordnetes einkristallines Metallnanopartikel mit einer Metallsulfid-Oberschicht, einem einkristallinen Metallnanopartikelkern und einer Metallnitridschicht zwischen der Metallsulfid-Oberschicht und dem einkristallinen Metallnanopartikelkern aufweist, wobei das Verfahren die folgenden zusätzlichen nachfolgenden Schritte nach Schritt (g) umfasst:
h) Bereitstellen der ersten hybriden bindemittelfreien Elektrode (12), wie in Schritt (g) erhalten, in einer anderen Verarbeitungskammer (11) und Evakuieren der besagten Verarbeitungskammer (11) auf einen Druck unter 100 Pa, vorzugsweise auf einen Druck unter 1 Pa, unter Verwendung einer Vakuumpumpe (16) und eines Druckmessers (15);
i) Zuführen von schwefelhaltigem Gas (13) in die evakuierte Verarbeitungskammer (11) aus Schritt (h), um einen Partialdruck des schwefelhaltigen Gases zwischen 1 Pa und 1•10⁵ Pa zu erhalten;
j) Einstellen der Temperatur in der Verarbeitungskammer (11) auf 25 bis 300 °C, vorzugsweise auf 100 bis 150 °C, mit einem Heizelement (14);
k) Ermöglichen, dass die mit Metallnitrid bedeckten einkristallinen Metallnanopartikel an den Spitzen der Kohlenstoffnanoröhren mit dem schwefelhaltigen Gas (13) in der Verarbeitungskammer (11) in Wechselwirkung treten, was zu der Bildung einer Metallsulfid-Oberschicht auf der Metallnitridschicht führt; und
I) Sicherstellen, dass die Temperatur der Verarbeitungskammer (11) unter einen Schwellenwert fällt, vorzugsweise unter 35 °C, und anschließendes Entlüften der Verarbeitungskammer (11) auf Atmosphärendruck,
wobei während des Verfahrens kein Bindemittel angewendet wird.

3. Verfahren nach Anspruch 1, wobei das Metall des leitfähigen Metallsubstrats Nickel ist und das Metallnitrid Nickelnitrid (NisN) ist.

4. Verfahren nach Anspruch 2, wobei das Metall des leitfähigen Metallsubstrats Nickel ist, das Metallnitrid Nickelnitrid (NisN) ist und wobei das Metallsulfid Trinickeldisulfid (Ni₃S₂) ist.

5. Verfahren nach einem der Ansprüche 1 - 4, wobei das in Schritt (c) verwendete stickstoffhaltige Gas aus der Gruppe ausgewählt ist, die aus molekularem Stickstoff (N₂), Ammoniak und Stickstoffdioxid besteht, wobei vorzugsweise das in Schritt (c) verwendete stickstoffhaltige Gas molekularer Stickstoff ist, wobei besonders bevorzugt das in Schritt (c) verwendete stickstoffhaltige Gas molekularer Stickstoff mit einer Reinheit von über 99 % ist, wobei der Partialdruck des molekularen Stickstoffs in der Verarbeitungskammer zwischen 10 und 100 Pa, vorzugsweise zwischen 10 und 30 Pa liegt.

6. Verfahren nach einem der Ansprüche 1 - 5, wobei die Kohlenstoffnanoröhren in Schritt (a) unter Verwendung eines Plasmadampfabscheidungs-Spitzenwachstumsverfahrens gezüchtet werden, das die folgenden Schritte umfasst:
I) Anordnen des leitfähigen Metallsubstrats (25a) auf einem geerdeten leitfähigen Substrathalter (22) in der Verarbeitungskammer (21);
II) Evakuieren der Verarbeitungskammer (21), um einen Druck unter 10 Pa zu erhalten;
III) Zuführen eines kohlenstoffhaltigen Gases (26a) in die Verarbeitungskammer, um einen Partialdruck des kohlenstoffhaltigen Gases in der Verarbeitungskammer (21) zwischen 10 Pa und 1000 Pa zu erhalten;
IV) Erzeugen eines Plasmas in der Verarbeitungskammer unter Verwendung eines Hochfrequenz-Plasmagenerators (23);
V) Ermöglichen, dass das Plasma in der Verarbeitungskammer (21) mit dem leitfähigen Metallsubstrat (25a) in Wechselwirkung tritt, um das Wachstum der Kohlenstoffnanoröhren auf dem leitfähigen Metallsubstrat in einer Richtung senkrecht zu der Oberfläche des leitfähigen Metallsubstrats zu ermöglichen, wobei jede Kohlenstoffnanoröhre nur ein an ihrer Spitze angeordnetes einkristallines Metallnanopartikel aufweist;
VI) Ausschalten des Hochfrequenz-Plasmagenerators (23);
VII) Sicherstellen, dass die Temperatur des leitfähigen Substrathalters (22) unter einen Schwellenwert fällt, vorzugsweise unter 35 °C; und
VIII) Entlüften der Verarbeitungskammer (21) auf Atmosphärendruck.

7. Verfahren nach Anspruch 6, wobei der in Schritt (IV) verwendete Hochfrequenz-Plasmagenerator (23), vorzugsweise ein Radiofrequenz(RF)-Plasmagenerator (13,56 MHz), vorzugsweise unter Verwendung einer induktiven Kopplung an eine leitfähige Metallspule (24), vorzugsweise eine Kupferspule, gekoppelt wird, die um die Verarbeitungskammer (21) gewickelt ist.

8. Verfahren nach Anspruch 6 oder 7,
• wobei das Wachstum der Kohlenstoffnanoröhren in Schritt (V) kontinuierlich für eine Dauer zwischen 1 und 60 Minuten ausgeführt wird; und/oder
• wobei das Plasma in der Verarbeitungskammer (21) in Schritt (IV) mit hoher Leistung erzeugt wird, vorzugsweise mit einer Leistung zwischen 500 und 1000 W.

9. Verfahren nach einem der Ansprüche 6 - 8, wobei das in Schritt (III) verwendete kohlenstoffhaltige Gas (26a) aus der Gruppe ausgewählt ist, die aus Methan, Kohlendioxid, Ethylen und Acetylen besteht, wobei das kohlenstoffhaltige Gas (26a) vorzugsweise Methan ist, besonders bevorzugt Methan mit einer Reinheit von über 99 %, wobei der Partialdruck des Methans in der Verarbeitungskammer (21) nach der Methanzufuhr zwischen 20 und 60 Pa liegt.

10. Erste hybride bindemittelfreie Elektrode für elektrochemische Energiespeichervorrichtungen, die durch das Verfahren nach einem der Ansprüche 1 - 9 erhalten wird, vorzugsweise für elektrochemische Superkondensatoren, wobei die besagte erste hybride bindemittelfreie Elektrode ein leitfähiges Metallsubstrat mit daran befestigten Kohlenstoffnanoröhren mit einer durchschnittlichen Länge von vorzugsweise 1 bis 2 µm und einem durchschnittlichen Durchmesser von vorzugsweise 50 bis 100 nm umfasst, vorzugsweise daraus besteht, wobei jede Kohlenstoffnanoröhre nur ein an ihrer Spitze angeordnetes einkristallines Metallnanopartikel mit einer Metallnitrid-Oberschicht aufweist,
wobei die Kohlenstoffnanoröhren in eine Richtung senkrecht zu der Oberfläche des leitfähigen Metallsubstrats weisen,
wobei das Metall der einkristallinen Metallnanopartikel, das Metall der Metallnitridschicht und das Metall des leitfähigen Metallsubstrats dasselbe sind, und
wobei die Metallnitridschicht auf dem einkristallinen Metallnanopartikelkern vorzugsweise in Form von geschichteten Dünnschichtstrukturen mit einer Gesamtschichtdicke zwischen 1 bis 10 nm vorliegt.

11. Erste hybride bindemittelfreie Elektrode nach Anspruch 10, wobei das Metall des leitfähigen Metallsubstrats Nickel ist und wobei das Metallnitrid Nickelnitrid (NisN) ist.

12. Zweite hybride bindemittelfreie Elektrode für elektrochemische Energiespeichervorrichtungen, die durch das Verfahren nach einem der Ansprüche 1 - 9 erhalten wird, vorzugsweise für elektrochemische Superkondensatoren, wobei die besagte zweite hybride bindemittelfreie Elektrode ein leitfähiges Metallsubstrat mit daran befestigten Kohlenstoffnanoröhren mit einer durchschnittlichen Länge von vorzugsweise 1 bis 2 µm und einem durchschnittlichen Durchmesser von vorzugsweise 50 bis 100 nm umfasst, vorzugsweise daraus besteht, wobei jede Kohlenstoffnanoröhre nur ein an ihrer Spitze angeordnetes einkristallines Metallnanopartikel mit einer Metallsulfid-Oberschicht, einem einkristallinen Metallnanopartikelkern und einer Metallnitridschicht zwischen der Metallsulfid-Oberschicht und dem einkristallinen Metallnanopartikelkern aufweist,
wobei die Kohlenstoffnanoröhren in eine Richtung senkrecht zu der Oberfläche des leitfähigen Metallsubstrats weisen,
wobei das Metall der einkristallinen Metallnanopartikel, das Metall der Metallnitridschicht, das Metall der Metallsulfidschicht und das Metall des leitfähigen Metallsubstrats dasselbe sind,
wobei die Metallnitridschicht auf dem einkristallinen Metallnanopartikelkern vorzugsweise in Form von geschichteten Dünnschichtstrukturen mit einer Gesamtschichtdicke zwischen 1 bis 10 nm vorliegt, und
wobei die Metallsulfidschicht auf der Metallnitridschicht auf dem einkristallinen Metallnanopartikelkern vorzugsweise in Form von einkristallinen Nanostrukturen mit einer individuellen Kristallitgröße von 50 bis 100 nm vorliegt.

13. Zweite hybride bindemittelfreie Elektrode nach Anspruch 12, wobei das Metall des leitfähigen Metallsubstrats Nickel ist, wobei das Metallnitrid Nickelnitrid (NisN) ist und wobei das Metallsulfid Trinickeldisulfid (Ni₃S₂) ist.

14. Verwendung der ersten hybriden bindemittelfreien Elektrode nach Anspruch 10 oder 11 als Elektrode für einen elektrochemischen Superkondensator für Hochfrequenzfilteranwendungen, wobei die besagte Elektrode vorzugsweise einen Phasenwinkel über -75° und eine Kapazität über 400 µF bei hohen Frequenzen (über 100 Hz) mit einer Grenzfrequenz über 6000 Hz aufweist.

15. Verwendung der zweiten hybriden bindemittelfreien Elektrode nach Anspruch 12 oder 13 als Elektrode für einen Superkondensator für elektrochemische Energiespeichervorrichtungen, wobei während des Lade-/Entladezyklus bei einer Stromdichte über 2 A•g⁻¹ die besagte Elektrode nach vielen Zyklen (mehr als 4000) vorzugsweise eine spezifische Kapazität von über 800 C•g⁻¹ liefert und wobei die spezifische Kapazität bei höheren Stromdichten (mehr als 10 A•g⁻¹) über 80 % der ursprünglichen spezifischen Kapazität (mehr als 600 C•g⁻¹) beibehält.

## Revendications

1. Procédé de fabrication d'une première électrode hybride sans liant pour dispositifs de stockage d'énergie électrochimique, de préférence pour supercondensateurs électrochimiques, ladite première électrode hybride sans liant comprenant, de préférence consistant en, un substrat métallique conducteur et des nanotubes de carbone fixés au substrat métallique conducteur, où chaque nanotube de carbone n'a seulement qu'une nanoparticule métallique monocristalline positionnée à sa pointe avec une couche supérieure de nitrure métallique, le procédé comprenant les étapes ultérieures suivantes:
a) développer des nanotubes de carbone, de préférence des nanotubes de carbone à parois multiples, dans une chambre de traitement (21) en utilisant un mécanisme de développement de pointe, où chaque nanotube de carbone n'a seulement qu'une nanoparticule métallique monocristalline positionnée à sa pointe, sur un substrat métallique conducteur (25a) dans une direction perpendiculaire à la surface du substrat métallique conducteur, où le métal des nanoparticules métalliques monocristallines et le métal du substrat métallique conducteur sont les mêmes ;
b) placer le substrat métallique conducteur avec les nanotubes de carbone dessus, tel qu'obtenu à l'étape (a), dans une chambre de traitement où le substrat métallique conducteur avec les nanotubes de carbone dessus est disposé sur un support de substrat conducteur qui n'est pas mis à la terre, et évacuer ladite chambre de traitement jusqu'à une pression inférieure à 10 Pa ;
c) fournir du gaz contenant de l'azote à la chambre de traitement évacuée de l'étape (b) pour obtenir une pression partielle du gaz contenant de l'azote comprise entre 10 Pa et 100 Pa ;
d) créer un plasma à l'intérieur de la chambre de traitement en utilisant un générateur de plasma haute fréquence ;
e) permettre aux nanoparticules métalliques monocristallines aux extrémités des nanotubes de carbone d'interagir avec le plasma contenant de l'azote à l'intérieur de la chambre de traitement pendant une période de temps comprise entre 5 et 105 s, conduisant à la formation d'une couche de nitrure métallique au-dessus des nanoparticules métalliques monocristallines ;
f) éteindre le générateur de plasma haute fréquence ; et
g) s'assurer que la température de la chambre de traitement chute en dessous d'une valeur seuil, de préférence en dessous de 35 °C, et ensuite ventiler la chambre de traitement jusqu'à la pression atmosphérique,
où aucun liant n'est appliqué pendant le processus.

2. Procédé selon la revendication 1, où la première électrode hybride sans liant obtenue à l'étape (g) est convertie en une deuxième électrode hybride sans liant pour dispositifs de stockage d'énergie électrochimique, de préférence pour supercondensateurs électrochimiques, comprenant, de préférence consistant en, un substrat métallique conducteur et des nanotubes de carbone fixés au substrat métallique conducteur, où chaque nanotube de carbone n'a seulement qu'une nanoparticule métallique monocristalline positionnée à sa pointe avec une couche supérieure de sulfure métallique, un noyau de nanoparticule métallique monocristalline et une couche de nitrure métallique entre la couche supérieure de sulfure métallique et le noyau de nanoparticule métallique monocristalline, le procédé comprenant les étapes ultérieures supplémentaires suivantes après l'étape (g) :
h) placer la première électrode hybride sans liant (12), telle qu'obtenue à l'étape (g), dans une autre chambre de traitement (11) et évacuer ladite chambre de traitement (11) jusqu'à une pression inférieure à 100 Pa, de préférence jusqu'à une pression inférieure à 1 Pa, en utilisant une pompe à vide (16) et un manomètre (15) ;
i) fournir du gaz contenant du soufre (135) à la chambre de traitement (11) évacuée de l'étape (h) pour obtenir une pression partielle du gaz contenant du soufre comprise entre 1 Pa et 1·10⁵ Pa ;
j) régler la température à l'intérieur de la chambre de traitement (11) entre 25 et 300 °C, de préférence entre 100 et 150 °C, avec un élément chauffant (14) ;
k) permettre aux nanoparticules métalliques monocristallines recouvertes de nitrure métallique aux pointes des nanotubes de carbone d'interagir avec le gaz contenant du soufre (13) à l'intérieur de la chambre de traitement (11), conduisant à la formation d'une couche supérieure de sulfure métallique sur la couche de nitrure métallique ; et
l) s'assurer que la température de la chambre de traitement (11) chute en dessous d'une valeur seuil, de préférence en dessous de 35 °C, puis ventiler la chambre de traitement (11) jusqu'à la pression atmosphérique,
où aucun liant n'est appliqué pendant le processus.

3. Procédé selon la revendication 1, où le métal du substrat métallique conducteur est du nickel et le nitrure métallique est du nitrure de nickel (NisN).

4. Procédé selon la revendication 2, où le métal du substrat métallique conducteur est du nickel, le nitrure métallique est du nitrure de nickel (NisN) et où le sulfure métallique est du disulfure de trinickel (Ni₃S₂).

5. Procédé selon l'une quelconque des revendications 1 à 4, où le gaz contenant de l'azote appliqué à l'étape (c) est sélectionné dans le groupe consistant en azote moléculaire (N₂), ammoniac et dioxyde d'azote, de préférence le gaz contenant de l'azote appliqué à l'étape (c) est de l'azote moléculaire, plus préférablement le gaz contenant de l'azote appliqué à l'étape (c) est de l'azote moléculaire avec une pureté supérieure à 99%, où la pression partielle de l'azote moléculaire à l'intérieur de la chambre de traitement est comprise entre 10 et 100 Pa, de préférence entre 10 et 30 Pa.

6. Procédé selon l'une quelconque des revendications 1 à 5, où les nanotubes de carbone sont développés à l'étape (a) en utilisant un procédé de développement de pointe par dépôt de vapeur de plasma comprenant les étapes suivantes :
I) disposer le substrat métallique conducteur (25a) sur un support de substrat conducteur mis à la terre (22) dans la chambre de traitement (21) ;
II) évacuer la chambre de traitement (21) pour obtenir une pression inférieure à 10 Pa ;
III) introduire un gaz contenant du carbone (26a) dans la chambre de traitement pour obtenir une pression partielle du gaz contenant du carbone à l'intérieur de la chambre de traitement (21) comprise entre 10 Pa et 1000 Pa ;
IV) créer un plasma à l'intérieur de la chambre de traitement en utilisant un générateur de plasma haute fréquence (23) ;
V) permettre au plasma à l'intérieur de la chambre de traitement (21) d'interagir avec le substrat métallique conducteur (25a) pour permettre le développement des nanotubes de carbone sur le substrat métallique conducteur dans une direction perpendiculaire à la surface du substrat métallique conducteur, où chaque nanotube de carbone n'a seulement qu'une nanoparticule métallique monocristalline positionnée à sa pointe ;
VI) éteindre le générateur de plasma haute fréquence (23) ;
VII) s'assurer que la température du support de substrat conducteur (22) descend en dessous d'une valeur seuil, de préférence en dessous de 35°C ; et
VIII) ventiler la chambre de traitement (21) jusqu'à la pression atmosphérique.

7. Procédé selon la revendication 6, où le générateur de plasma haute fréquence (23), de préférence un générateur de plasma radiofréquence (RF) (13,56 MHz), appliqué à l'étape (IV), est couplé, de préférence en utilisant un couplage inductif, à une bobine métallique conductrice (24), de préférence une bobine de cuivre, enroulée autour de la chambre de traitement (21).

8. Procédé selon la revendication 6 ou 7,
• où le développement des nanotubes de carbone à l'étape (V) est effectué en continu pendant une durée comprise entre 1 et 60 minutes ; et/ou
• où le plasma à l'intérieur de la chambre de traitement (21) est créé à l'étape (IV) à une puissance élevée, de préférence à une puissance comprise entre 500 et 1000 W.

9. Procédé selon l'une quelconque des revendications 6 à 8, où le gaz contenant du carbone (26a) appliqué à l'étape (III) est sélectionné dans le groupe consistant en méthane, dioxyde de carbone, éthylène et acétylène, où le gaz contenant du carbone (26a) est de préférence du méthane, plus préférablement du méthane avec une pureté supérieure à 99%, où la pression partielle du méthane à l'intérieur de la chambre de traitement (21) est comprise entre 20 et 60 Pa après l'alimentation en méthane.

10. Première électrode hybride sans liant pour dispositifs de stockage d'énergie électrochimique obtenue par le procédé selon l'une quelconque des revendications 1 à 9, de préférence pour supercondensateurs électrochimiques, ladite première électrode hybride sans liant comprenant, de préférence consistant en un substrat métallique conducteur avec des nanotubes de carbone ayant une longueur moyenne de préférence de 1 à 2 µm et un diamètre moyen de préférence de 50 à 100 nm fixés à celui-ci, où chaque nanotube de carbone n'a seulement qu'une nanoparticule métallique monocristalline positionnée à sa pointe avec une couche supérieure de nitrure métallique,
où les nanotubes de carbone pointent dans une direction perpendiculaire à la surface du substrat métallique conducteur,
où le métal des nanoparticules métalliques monocristallines, le métal de la couche de nitrure métallique et le métal du substrat métallique conducteur sont les mêmes, et
où la couche de nitrure métallique au-dessus du noyau de nanoparticules métalliques monocristallines est de préférence sous la forme de structures en couches minces stratifiées, avec une épaisseur de couche totale comprise entre 1 et 10 nm.

11. Première électrode hybride sans liant selon la revendication 10, où le métal du substrat métallique conducteur est du nickel et où le nitrure métallique est du nitrure de nickel (NisN).

12. Deuxième électrode hybride sans liant pour dispositifs de stockage d'énergie électrochimique obtenue par le procédé selon l'une quelconque des revendications 1 à 9, de préférence pour des supercondensateurs électrochimiques, ladite deuxième électrode hybride sans liant comprenant, de préférence consistant en, un substrat métallique conducteur avec des nanotubes de carbone ayant une longueur moyenne de préférence de 1 à 2 µm et un diamètre moyen de préférence de 50 à 100 nm fixés à celui-ci, où chaque nanotube de carbone n'a seulement qu'une nanoparticule métallique monocristalline positionnée à sa pointe avec une couche supérieure de sulfure métallique, un noyau de nanoparticule métallique monocristalline et une couche de nitrure métallique entre la couche supérieure de sulfure métallique et le noyau de nanoparticule métallique monocristalline,
où les nanotubes de carbone pointent dans une direction perpendiculaire à la surface du substrat métallique conducteur,
où le métal des nanoparticules métalliques monocristallines, le métal de la couche de nitrure métallique, le métal de la couche de sulfure métallique et le métal du substrat métallique conducteur sont les mêmes,
où la couche de nitrure métallique au-dessus du noyau de nanoparticules métalliques monocristallines est de préférence sous la forme de structures en couches minces stratifiées, avec une épaisseur de couche totale comprise entre 1 et 10 nm, et
où la couche de sulfure métallique au-dessus du noyau de nanoparticules métalliques monocristallines est de préférence sous la forme de nanostructures monocristallines, avec une taille de cristallite individuelle comprise entre 50 et 100 nm.

13. Deuxième électrode hybride sans liant selon la revendication 12, où le métal du substrat métallique conducteur est du nickel, où le nitrure métallique est du nitrure de nickel (NisN) et où le sulfure métallique est du disulfure de trinickel (Ni₃S₂).

14. Utilisation de la première électrode hybride sans liant selon la revendication 10 ou 11 comme une électrode pour un supercondensateur électrochimique pour des applications de filtrage haute fréquence, où ladite électrode présente de préférence un angle de phase supérieur à -75° et une capacitance supérieure à 400 µF à hautes fréquences (supérieures à 100 Hz) avec une fréquence de coupure supérieure à 6000 Hz.

15. Utilisation de la deuxième électrode hybride sans liant selon la revendication 12 ou 13 comme une électrode pour un supercondensateur pour dispositifs de stockage d'énergie électrochimique, où pendant le cycle de charge-décharge à une densité de courant supérieure à 2 A·g⁻¹, ladite électrode après de nombreux cycles (plus de 4000) fournit de préférence une capacité spécifique supérieure à 800 C·g⁻¹, et où la capacité spécifique conserve plus de 80 % de la capacité spécifique initiale (plus de 600 C·g⁻¹) à des densités de courant plus élevées (plus de 10 A·g⁻¹).
